# EUROPEAN PATENT SPECIFICATION

(11) **EP 1 454 765 B1**
(45) Date of publication and mention of the grant of the patent: **25.07.2007**
(21) Application number: 04100782.4
(22) Date of filing: 27.02.2004
(51) Int. Cl.: B60C 1/00, C08K 3/00, C08K 3/04, C08K 7/02

(54) **Tire with rubber component containing electrically conductive carbon black and fibrillated aramid fibers**
Reifen mit einem Gummibestandteil, das elektrisch leitfähigen Russ und fibrillierte Aramidfasern enthält
Pneu avec un élément à base d'une composition de caoutchouc contenant de noir de carbone electroconductif et des fibres d'aramide fibrillées

(30) Priority: 07.03.2003 US 385913
(43) Date of publication of application: 08.09.2004
(73) Proprietor: THE GOODYEAR TIRE & RUBBER COMPANY, Akron, Ohio 44316-0001 (US)
(72) Inventor: ZANZIG, David John, L-8064, Bertrange (LU); RYBA, Jennifer Lyn, 44281, Wadsworth (US)
(74) Representative: Kutsch, Bernd

(56) References cited:
- EP-A- 0 795 581
- EP-A- 0 904 957
- EP-A- 1 085 048
- SWOR R A ET AL: "Carbon blacks for electrical conductivity applications" KAUTSCHUK UND GUMMI - KUNSTSTOFFE, DR. ALFRED HUTHIG VERLAG GMBH. HEIDELBERG, DE, vol. 37, no. 3, 1 March 1984 (1984-03-01), pages 198-206, XP002088799 ISSN: 0948-3276

## Description

### Field of the Invention

A pneumatic rubber tire with a rubber component which contains an electrically conductive carbon black and aramid pulp of fibrillated aramid fibers is disclosed. Such rubber component is selected from at least one of sidewall, tread base for a tire having a tread of a tread/base construction and apex.

### Background of the Invention

Pneumatic tires typically have various components which are comprised of carbon black reinforced rubber compositions.

Reduction in hysteresis of the respective rubber composition, as evidenced by an increase in its rebound physical property, typically leads to a beneficial reduction in internal heat build up as well as a beneficial reduction in rolling resistance of a tire with a sidewall, tread base and/or apex of such rubber composition of reduced hysteresis.

It is also known that a decrease in the hysteresis of a carbon black reinforced rubber composition, as evidenced by an increase in its rebound physical property, can normally readily be accomplished by simply reducing its carbon black content. However, such carbon black reinforcement reduction typically leads to serious disadvantages such as, for example, reduction in reinforcement of the rubber composition as evidenced by a reduction in its modulus physical property as well as a reduction in its electrical conductivity.

The reduction in reinforced strength of the respective component of the tire is readily appreciated as being a significant consideration for not unnecessarily reducing the reinforcing carbon content of the respective rubber composition.

The reduction in electrical conductivity of the respective rubber composition may be a significant consideration where a path of reduced electrical resistivity is desired to dissipate build-up of static electricity within the tire due to a substantial reduction in the carbon black content as would be recognized by one having skilled in such art.

For this invention, then, it is desired to provide such aforesaid component for a tire with a relatively reduced amount of normally used rubber reinforcing carbon black to promote a lower hysteresis property as evidenced by a rebound physical property of the rubber composition itself.

For some applications, it may be desired to provide a tire sidewall rubber composition, as well as a tread base and/or tire apex composition, which promotes a lower rolling resistance for the respective tire and increase in fuel economy for a vehicle with such tire. Accordingly, it is desired to provide a tire with a rubber sidewall composition, as well as a tread base and/or apex rubber composition, having a relatively higher rebound property and therefore having a lower hysteresis property which is indicative of promoting a lower rolling resistance for the respective tire.

Rubber reinforcing carbon blacks typically used for tire sidewall rubber compositions, as well as tread base and/or tread apex rubber compositions, are usually of a somewhat larger particle size than carbon blacks conventionally used for tire tread rubber compositions. Such carbon blacks for reinforcing tire sidewall rubber compositions are, for example, those with ASTM designations of N550, N326 and N330.

For this invention, it is desired to provide a significantly different reinforcement for a tire sidewall rubber composition, as well as tread base and/or tire apex rubber composition, for a purpose of promoting a higher rebound value for the tire component rubber composition in combination with providing the rubber composition with substantially equal to or greater reinforcement in terms of its 200 percent modulus.

Accordingly, all or part of the more rubber reinforcing carbon black for a tire sidewall rubber composition, as well as a tread base and/or tire apex rubber composition, is replaced with an alternative carbon black which is more electrically conductive together with fibrillated aramid fibers.

In one aspect, it is desired that the alternative carbon black aids in promoting a path of suitable electrical resistivity (greater electrical conductivity) for the sidewall to aid in conducting built-up static electricity from the vehicular wheel to the ground, namely from the tire bead portion to the tire tread.

Accordingly, for one aspect of this invention, such tire sidewall layer is provided as an outer layer of a rubber composition which contains reinforcement as a dispersion of a relatively electrically conductive carbon black, which alternately includes dual carbon blacks, and short fibrillated aramid fibers.

It is envisioned herein that use of the relatively electrically conductive carbon black enables use of a reduced content of more conventional rubber reinforcing carbon black used for tire rubber sidewall reinforcement, as well as for a tread base and/or tire apex rubber reinforcement, insofar as electrical conductivity of the rubber composition is concerned.

Therefore, one aspect of this invention envisions use of dual carbon blacks in a tire sidewall rubber composition, as well as a tread base and/or tire apex rubber composition, having distinctly different ASTM recognized properties, namely lodine number (or BET surface area value) and DBP (dibutyl phthalate) values.

It is also envisioned herein that the use of a small content of the short discrete fibrillated aramid fibers both aids in the reinforcement of the outer sidewall layer, as well as the tread base and/or tire apex, and therefor significant physical properties such as, for example, a 200 percent modulus, and also thereby enables use of a thinner outer sidewall layer, if desired.

In the description of this invention, the term "phr" relates to parts by weight of an ingredient per 100 parts by weight of rubber, unless otherwise indicated.

The terms "rubber" and "elastomer" are used interchangeably unless otherwise indicated. The terms "vulcanized" and "cured" are used interchangeably unless otherwise indicated. The terms "compound" and "rubber composition" may be used interchangeably unless indicated.

### Disclosure and Practice of the Invention

In accordance with this invention, a pneumatic rubber tire is provided having a component selected from at least one of a sidewall comprising an outer visually observable layer of a sulfur vulcanized rubber composition, tread base of a tread base of a cap/base construction (where the circumferential tread cap rubber layer is intended to be ground contacting and the tread base rubber layer underlies the tread cap) and tire apex (a rubber component extending radially outward from a tire bead into the sidewall of the tire) comprising, based parts by weight per 100 parts by weight rubber (phr);
(A) 100 parts by weight of diene-based elastomers comprising
   (1) 35 to 60 phr of natural cis 1,4-polyisoprene rubber, and
   (2) 40 to 65 phr of cis 1,4-polybutadiene rubber;
(B) 7 to 50, alternately 10 to 35, phr of carbon black composed of:
   (1) from 5 to 30, alternately 5 to 20, phr of a first particulate rubber reinforcing carbon black having an iodine value (ASTM D1510) in a range of from 35 to 80, alternately 35 to 50, mg/g, a BET (nitrogen) surface area of 40 to 50 m²/g and a DBP value (ASTM D2414) in a range of from 60 to 130, alternately 115 to 130, ml/100g, and
   (2) 2 to 20, alternately 5 to 15, phr of particulate electrically conductive second carbon black having a BET (nitrogen) surface area in a range of from 245 to 260 m²/g and a DBP value (ASTM D2414) in a range of from 170 to 185 ml/100g; and
(C) 0.5 to 15, preferably 0.5 to 5, phr of short, discontinuous, fibrillated aramid fibers.

Representative of particulate rubber reinforcing carbon blacks conventionally used for reinforcement of tire sidewalls are, for example, N550, N330 and N326, which are ASTM designations, which they, as well as other rubber reinforcing carbon blacks, are more fully referenced in The Vanderbilt Rubber Handbook (1978), Pages 414 through 417. The Handbook, on Page 416 refers the N330-399 carbon blacks as being classified as according to abrasion resistance as HAF grades of carbon black and the N500-599 carbon blacks as being classified according to rubber processing properties as FEF grades of carbon black. According to page 414 of the Handbook, the term HAF relates to "high abrasion furnace" carbon black and the term FEF relates to "fast extrusion furnace" carbon black. For example, the N550 carbon black is described as having an Iodine value of 43 mg/g and a DBP value of 121 ml/g.

It is envisioned that such N550 carbon black may be described as having an Iodine value (ASTM D1510) in a range of 40 to 50 mg/g and a DBP (ASTM D2414) value in a range of 115 to 130 ml/g.

The low temperature nitrogen surface area (SA), using the BET approach is reported as being 42 m²/g in the Journal of the IRI of June, 1972, Page 119 "Reinforcing Properties of Carbon Black Mixtures in Natural Rubber by Donnet, et al". Apparently, the aforesaid lodine value and BET surface area value are similar in nature for a respective carbon black. According to the Handbook on Page 417, the N326 and N330 carbon blacks have an Iodine value of approximately 82 mg/g and DBP values of approximately 71 and approximately 102 ml/g, respectively.

Various relatively electrically conductive carbon blacks may be used which are typically more electrically conductive than convention rubber reinforcing carbon blacks recited on the aforesaid Page 417 of the Handbook. According to Page 416 of the Handbook, the term XCF relates to classification based upon electrical conductivity properties of the carbon black. Apparently an N472 classified carbon black is an example of an XCF carbon black which has a relatively higher than normal electrical conductivity yet apparently still has a degree of rubber reinforcement ability.

A representative example of a carbon blacks which is relatively electrically conductive is, for example, Vulcan XC-72^{™} from the Cabot Corporation, as an ECF type carbon black having an ASTM designation of N472 with BET (nitrogen surface area) value of 254 m²/g, an lodine value of 270 mg/g and a DBP value of 178 ml/100g.

It is envisioned herein that such N472 carbon black may be described as having a BET (nitrogen) value in a range of 245 to 260 m²/g, an lodine value in a range of 260 to 280 mg/g and a DBP value in a range of 170 to 185 ml/100g.

Other examples of carbon blacks which are considered as being relatively electrically conductive are, for example, Corax XE-2^{™} from Degussa AG having a BET value of 560 m²/g and a DBP value of 400 ml/100g; 23MM^{™} from the MMM Company having a BET value of 558 m²/g and a DBP value of 300 ml/100g; Ketjen EC600J^{™} and Ketjen EC300J^{™} from the Akzo Company having BET values of 1040 and 800 m²/g and DBP values of 550 and 360 ml/100g, respectively.

Exemplary of the short, discontinuous, fibrillated aramid fibers are various Kevlar^{™} fibers from the E. I. duPont de Nemours Company. Preferably, such aramid is understood to be primarily a poly(para-phenyleneterephthalamide). Preferably, it is a long chain synthetic polymer in which at least 85 percent of the amide linkages are attached to two aromatic rings. The aramid fibers are essentially inextensible in nature.

Various of such aramid fibers may be composed of, for example, a trunk portion having a length in a range of 0.2 to 5 mm, a diameter in a range of 0.005 to 0.02 mm, and an aspect ratio (L/D) greater than 100 and a plurality of fibrils extending outward from said trunk having diameters substantially smaller than the diameter of the trunk from which they extend.

Such aramid fibers are referred to herein as "aramid pulp", a term believed to be recognized on one having skill in such art. For a more detailed description of such aramid pulp and use in rubber compositions, particularly as a tire component, see US-A- 4,871,004.

A significant aspect of this invention is providing a tire sidewall rubber composition which contains a combination of a carbon black of relatively low electrical resistivity and fibrillated aramid fibers particularly where it is desired to provide a tire sidewall with a path of reduced electrical resistivity (increased electrical conductivity) in which a higher rebound property is promoted together with a greater reinforcement (e.g. higher 200 percent modulus) as compared to use of the aforesaid more conventional carbon blacks for sidewall rubber reinforcement as well as tread base and/or tire apex rubber reinforcement.

The promoted higher rebound property, which is an indication of lower hysteresis of the rubber composition and a corresponding indication of lower heat build up of the rubber composition under working conditions is also seen herein as being indicative of a reduction in a tire's rolling resistance and potential increase in fuel economy of a vehicle with which the tire is associated.

The rubber compositions of the sidewall are compounded by methods generally known in the rubber compounding art, such as mixing the various sulfur-vulcanizable constituent rubbers with various commonly used additive materials such as, for example, curing aids, such as sulfur, activators, retarders and accelerators, processing additives, resins including tackifying resins, and plasticizers, fillers, pigments, fatty acid, zinc oxide, waxes, antioxidants and antiozonants and reinforcing materials such as, for example, carbon black.

Typical amounts of tackifier resins, if used, may comprise 0.5 to 10 phr, usually 1 to 5 phr. Typical amounts of processing aids may comprise 1 to 20 phr. Such processing aids are intended to exclude, or at least substantially exclude aromatic, napthenic, and/or paraffinic processing oils. Typical amounts of antioxidants comprise 1 to 5 phr. Representative antioxidants may be, for example, diphenyl-p-phenylenediamine and others, such as, for example, those disclosed in the Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 6 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide. However, the most important aspects of the invention are directed to the utilization of a combination of the rubber reinforcing carbon black, electrically conductive carbon black and aramid pulp in a tire sidewall rubber composition and to the utilization of reduced content of conventional, for example N550, N326 and N330, rubber sidewall reinforcing carbon blacks in combination with both an additional carbon black having a relatively lower electrical resistivity and short, discrete, fibrillated aramid fibers.

The vulcanization is conducted in the presence of a sulfur vulcanizing agent like elemental sulfur. The sulfur vulcanizing agents are used in an amount ranging from 0.5 to 4 phr.

Accelerators are used to control the time and/or temperature required for vulcanization and to improve the properties of the vulcanizate. In one embodiment, a single accelerator system may be used. In another embodiment, combinations of two or more accelerators which the primary accelerator is generally used in the larger amount (0.5 to 2 phr), and a secondary accelerator which is generally used in smaller amounts (0.05 to 0.50 phr) in order to activate and to improve the properties of the vulcanizate. Combinations of these accelerators have been known to produce a synergistic effect on the final properties and are somewhat better than those produced by use of either accelerator alone. Suitable types of accelerators that may be used in the present invention are amines, disulfides, guanidines, thioureas, thiazoles, thiurams, sulfenamides, dithiocarbamates and xanthates. If a second accelerator is used, the secondary accelerator is preferably a guanidine, dithiocarbamate or thiuram compound.

The tire can be built, conventionally shaped, molded and cured by various methods known in the art.

The invention may be better understood by reference to the following example in which the parts and percentages are by weight unless otherwise indicated.

### EXAMPLE I

Samples of a representative rubber composition which might be used, for example, a tire sidewall and/or a tread base and/or tire apex were prepared which were comprised of ingredients shown in Table 1 (values rounded) as Samples A and B, where Sample A is presented as a Control Sample.

Control Sample A used a relatively conventional rubber reinforcing carbon black for tire sidewall reinforcement, namely an N550 carbon black.

Sample B used a reduced amount of conventional rubber reinforcing carbon black for a sidewall rubber composition (the N550 carbon black) in combination with a small amount of a relatively electrically conductive carbon black as N472 carbon black, and a small amount of discrete fibrillated aramid fibers. The aramid fibers were provided as a composite thereof with natural cis 1,4-polyisoprene rubber.

**Table 1**

| | Parts | |
|---|---|---|
| Material | Control Sample A | Sample B |
| Non-Productive Mixing (160°C) | | |
| Natural rubber¹ | 40 | 0 |
| Natural rubber and aramid pulp² | 0 | 52 |
| (40 phr of natural rubber and 12 phr of pulp) | | |
| Cis 1,4-polybutadiene³ | 60 | 60 |
| Rubber reinforcing carbon black⁴ | 50 | 20 |
| Electrically conductive carbon black⁵ | 0 | 15 |
| Processing oil (aromatic)⁶ | 13.3 | 6 |
| Antidegradants⁷ | 5 | 2.4 |
| Productive Mixing (115°C) | | |
| Sulfur | 1.2 | 1.5 |
| Accelerator(s)⁸ | 0.6 | 1.0 |

| | | |
|---|---|---|
| ¹Cis 1,4-polyisoprene rubber ²Obtained as 6F722 engineered elastomer composite from E. I. duPont de Nemours Company composed of 77 weight percent natural cis 1,4-polyisoprene rubber and dispersion therein of 23 weight percent Kevlar^{™} aramid pulp in a form of fibrillated aramid fibers ³Cis 1,4-polybutadiene rubber obtained as BUD1207^{™} from the Goodyear Tire & Rubber Company having a cis 1,4- content of 98 percent ⁴N550, an ASTM designation for a carbon black having an iodine value of about 43 mg/g and a DBP (dibutylphthalate) value of about 121 ml/100g ⁵N472, and ASTM designation for a carbon black having an iodine value of about 270 mg/g, a nitrogen surface area (BET) of about 254 m²/g and a DBP (dibutylphthalate) value of about 178 ml/100g, obtained as XC-72^{™} from the Cabot Corporation ⁶Obtained as Textract 2202^{™} from the Motiva Company ⁷Amine type ⁸Sulfenamide | | |

### EXAMPLE II

The prepared rubber composition Samples were cured at a temperature of about 170°C for about 6 minutes and the resulting cured rubber samples evaluated for their physical properties as shown in the following Table 2.

**Table 2**

| Properties | Control Sample A | Sample B |
|---|---|---|
| MDR Rheometer¹ (150°C) | | |
| Minimum torque (dN-m) | 1.9 | 3.4 |
| Maximum torque (dN-m) | 9.9 | 17.8 |
| ATS Stress Strain² | | |
| 200% modulus (MPa) | 2.29 | 8.77 |
| 300% modulus (MPa) | 4.76 | * |
| Ultimate tensile strength (MPa) | 10.66 | 8.47 |
| Ultimate elongation (%) | 530 | 249 |
| Rebound (23°C) | 54.3 | 56.5 |
| Rebound (100°C) | 57 | 62.6 |
| RPA Low Strain modulus³ | | |
| 10 percent strain, at one Hertz and 100°C (kPa) | 656 | 1366 |
| Electrical Volume Resistivity | | |
| ASTM D257-98, ohm-cm | 3.08 x10⁸ | 1.96 x10⁵ |

| | | |
|---|---|---|
| * Sample broke before reaching an elongation of 300 percent ¹Data obtained according to Moving Die Rheometer instrument (referred to in the Table as "MDR Rheometer"), model MDR-2000 by Alpha Technologies, used for determining cure characteristics of elastomeric materials, such as for example Torque, T25, etc. ²Data obtained according to Automated Testing System instrument (referred to in the Table as "ATS") of the Instron Corporation which incorporates six tests in one system. Such instrument may determine ultimate tensile, ultimate elongation, modulii, rebound, etc. Tensile data reported in the Table is generated by running the ring tensile test station which is an Instron 4201 load frame. ³Data obtained according to Rubber Process Analyzer as RPA 2000^{™} instrument by Alpha Technologies, formerly the Flexsys Company and formerly the Monsanto Company (referred to in the Table as "RPA"). References to an RPA-2000 instrument may be found in the following publications: H. A. Palowski, et al, Rubber World, June 1992 and January 1997, as well as Rubber & Plastics News, April 26 and May 10, 1993. | | |

From Table 2 it can be seen that the rubber composition of Sample B exhibited greater reinforcement in terms of its 200 percent modulus, a lower hysteresis as represented by its significantly higher 100°C rebound value and a significantly lower electrical resistivity (greater electrical conductivity), by three orders of magnitude as compared to the Control Sample A.

It can also be seen in Table 2 that the RPA Low Strain (low elongation) modulus greatly increased for Sample B as compared to the Control Sample A, namely from 656 to 1366 kPa indicating a greater reinforcement at the low elongation. This is considered herein to be significant because it is unusual to obtain both higher reinforcement together with a lower hysteresis. Likewise, it is difficult to decrease the electrical resistivity (increase the electrical conductivity) of a rubber composition while decreasing its hysteresis. Therefore these results indicate that the composition of Sample B could provide a tire with an improved balance of reduced rolling resistance, or better fuel economy, while improving the tire handling characteristics and while improving the tire's ability to dissipate static charge.

It is important to appreciate that it is relatively easy to lower the hysteresis of a rubber composition by reducing its rubber reinforcing carbon black loading. However such reduction in rubber reinforcing carbon content is typically expected to lead to lower rubber reinforcement (e.g. lower modulus) and increased electrical resistivity (reduced electrical conductivity) for low carbon black contents.

Thus a significant aspect of this invention, as reflected in Sample B, is a unique balance of low hysteresis in combination with high reinforcement and excellent electrical conductivity for the rubber composition.

## Claims

1. A pneumatic rubber tire having a component selected from at least one of a sidewall, tread base of a tread of cap/base construction and tire apex which comprises a rubber composition comprising, based parts by weight per 100 parts by weight rubber (phr);
(A) 100 parts by weight of diene-based elastomers comprising
(1) 35 phr to 60 phr of natural cis 1,4-polyisoprene rubber, and
(2) 40 phr to 65 phr of cis 1,4-polybutadiene rubber;
(B) 7 phr to 50 phr of carbon black composed of:
(1) from 5 to 30 phr of first particulate rubber reinforcing carbon black having an Iodine value in a range of 35 to 80 mg/g, a BET (nitrogen surface area) value in a range of 40 to 50 m²/g and a DBP value in a range of 60 to 130 ml/100g and/or wherein said first carbon black has an ASTM designation of N550, and
(2) 2 to 20 phr of a second particulate electrically conductive carbon black having a BET (nitrogen surface area) value in a range of from 245 to 260 m²/g, an Iodine value in a range of 260 to 280 mg/g and a DBP value in a range of 170 to 185 ml/100g and/or wherein said second carbon black has an ASTM designation of N472; and
(C) 0.5 to 15 phr of short, discontinuous, fibrillated aramid fibers.

2. The tire of claim 1, wherein said aramid of said fibrillated aramid fibers is primarily a poly(para-phenyleneterephthalamide) as a long chain polymer in which at least 85 percent of the amide linkages are attached to two aromatic rings.

3. The tire of at least one of the previous claims, wherein said aramid fibers are composed of a trunk portion having a length in a range of 0.2 to 5 mm, a diameter in a range of 0.005 to 0.02 mm and a plurality of fibrils extending outward from said trunk having diameters substantially smaller than the diameter from the trunk from which they extend.

4. The tire of at least one of the previous claims, wherein said rubber composition contains from 10 to 50 phr of carbon black composed of 5 to 35 phr of said first rubber reinforcing carbon black and 5 to 15 phr of said second carbon black.

5. The tire of at least one of the previous claims, wherein said component is a sidewall outer layer.

6. The tire of at least one of the previous claims, wherein said component is a tread base of a tread of cap/base construction, wherein said tread cap is a rubber layer designed to be ground contacting, and wherein said tread base is a rubber layer which underlines said tread cap layer.

7. The tire at least one of the previous claims, wherein said component is a tire apex extending radially outward from a tire bead into the tire sidewall.

## Patentansprüche

1. Gummi-Luftreifen mit einem Bauteil, gewählt aus mindestens einem von Seitenwand, Laufstreifen-Unterteil einer Lauffläche von Laufstreifenoberteil-/unterteilkonstruktion und Reifen-Kernprofil, welches eine Kautschukzusammensetzung umfasst, umfassend, auf Basis von Gewichtsteilen pro 100 Gewichtsteile Kautschuk (ThK) :
(A) 100 Gewichtsteile dienbasierte Elastomere, umfassend
(1) 35 ThK bis 60 ThK natürlichen cis-1,4-Polyisoprenkautschuk, und
(2) 40 ThK bis 65 ThK cis-1,4-Polybutadienkautschuk ;
(B) 7 ThK bis 50 ThK Carbon Black, zusammengesetzt aus :
(1) 5 bis 30 ThK eines ersten partikelförmigen Kautschukverstärkungs-Carbon Blacks mit einem Iodwert in einem Bereich von 35 bis 80 mg/g, einem BET(Stickstoffoberflächengebiet)-Wert in einem Bereich von 40 bis 50 m²/g und einem DBP-Wert in einem Bereich von 60 bis 130 ml/100g, und/oder wobei besagtes erstes Carbon Black eine ASTM-Bezeichnung N550 hat, und
(2) 2 bis 20 ThK eines zweiten partikelförmigen elektrisch leitenden Carbon Blacks mit einem BET(Stickstoffoberflächengebiet)-Wert in einem Bereich von 245 bis 260 m2/g, einem Iodwert in einem Bereich von 260 bis 280 mg/g und einem DBP-Wert in einem Bereich von 170 bis 185 ml/100g und/oder wobei besagtes zweites Carbon Black eine ASTM-Bezeichnung N472 hat ; und
(C) 0,5 bis 15 ThK kurze, diskontinuierliche, fibrillierte Aramidfasern.

2. Reifen von Anspruch 1, wobei das Aramid der fibrillierten Aramidfasern in erster Linie ein Poly(para-phenylenterephthalamid) als ein langkettiges Polymer ist, worin mindestens 85 Prozent der Aramidbindungen an zwei Aromatenringen befestigt sind.

3. Reifen von mindestens einem der vorhergehenden Ansprüche, wobei die Aramidfasern aus einem Stammteil mit einer Länge in einem Bereich von 0,2 bis 5 mm, einem Durchmesser in einem Bereich von 0,005 bis 0,02 mm und einer Vielzahl von Fibrillen bestehen, die sich von dem Stamm auswärts erstrecken und Durchmesser aufweisen, die wesentlich kleiner sind als der Durchmesser des Stamms, von dem sie sich erstrecken.

4. Reifen von mindestens einem der vorhergehenden Ansprüche, wobei die Kautschukzusammensetzung 10 bis 50 ThK Carbon Black, zusammengesetzt aus 5 bis 35 ThK des ersten Kautschukverstärkungs-Carbon Black und 5 bis 15 ThK des zweiten Carbon Black, enthält.

5. Reifen von mindestens einem der vorhergehenden Ansprüche, wobei das Bauteil eine Seitenwand-Außenlage ist.

6. Reifen von mindestens einem der vorhergehenden Ansprüche, wobei das Bauteil ein Laufstreifen-Unterteil einer Lauffläche mit Laufstreifenoberteil-/unterteilkonstruktion ist, wobei das Laufstreifenoberteil eine Gummilage ist, die zum Inkontaktkommen mit dem Boden gestaltet ist, und wobei das Laufstreifenunterteil eine Gummilage ist, die unter der Laufstreifenoberteillage liegt.

7. Reifen von mindestens einem der vorhergehenden Ansprüche, wobei das Bauteil ein Reifen-Kernprofil ist, das sich von einem Reifenwulst radial auswärts in die Reifenseitenwand erstreckt.

## Revendications

1. Bandage pneumatique en caoutchouc possédant un composant représentant au moins un membre choisi parmi le groupe comprenant un flanc, une base de bande de roulement d'une bande de roulement de structure chape/base et un bourrage sur tringle de bandage pneumatique, qui comprend une composition du caoutchouc comprenant, basée sur la partie en poids par 100 parties en poids de caoutchouc (phr) :
(A) 100 parties en poids d'élastomère à base diénique comprenant
(1) à concurrence de 35 phr à 60 phr, du caoutchouc naturel de cis-1,4-polyisoprène ; et
(2) à concurrence de 40 phr à 65 phr, du caoutchouc de cis-1,4-polybutadiène ;
(B) à concurrence de 7 phr à 50 phr, du noir de carbone composé de :
(1) à concurrence de 5 à 30 phr, un premier noir de carbone particulaire pour le renforcement du caoutchouc possédant un indice d'iode dans la plage de 35 à 80 mg/g, une valeur BET (superficie spécifique mesurée par adsorption-désorption d'azote) dans la plage de 40 à 50 m²/g et une valeur DBP dans la plage de 60 à 130 ml/100 g et/ou ledit premier noir de carbone possédant la désignation ASTM N550, et
(2) à concurrence de 2 à 20 phr, un deuxième noir de carbone particulaire électroconducteur possédant une valeur BET (superficie spécifique mesurée par adsorption-désorption d'azote) dans la plage de 245 à 260 m²/g, un indice d'iode dans la plage de 260 à 280 mg/g et une valeur DBP dans la plage de 170 à 185 ml/100 g et/ou ledit premier noir de carbone possédant la désignation ASTM N472 ; et
(C) à concurrence de 0,5 à 15 phr, de courtes fibres d'aramide discontinues fibrillées.

2. Bandage pneumatique selon la revendication 1, dans lequel ledit aramide desdites fibres d'aramide fibrillées représente principalement un polymère de para-phénylènetéréphtalamide sous la forme d'un polymère à longues chaînes dans lequel au moins 85 % des liaisons amide sont fixés à deux noyaux aromatiques.

3. Bandage pneumatique selon au moins une des revendications précédentes, dans lequel lesdites fibres d'aramide sont composées d'une portion de tronc possédant une longueur dans la plage de 0,2 à 5 mm, un diamètre dans la plage de 0,005 à 0,02 mm, plusieurs fibrilles s'étendant à l'extérieur dudit tronc et possédant des diamètres essentiellement inférieurs au diamètre du tronc à partir duquel elles s'étendent.

4. Bandage pneumatique selon au moins une des revendications précédentes, dans lequel ladite composition de caoutchouc contient, à concurrence de 10 à 50 phr, du noir de carbone composé, à concurrence de 5 à 35 phr, dudit premier noir de carbone pour le renforcement du caoutchouc et, à concurrence de 5 à 15 phr, dudit deuxième noir de carbone.

5. Bandage pneumatique selon au moins une des revendications précédentes, dans lequel ledit composant est une couche externe de flanc.

6. Bandage pneumatique selon au moins une des revendications précédentes, dans lequel ledit composant est une base de bande de roulement d'une bande de roulement de structure de type chape/base, ladite chape de bande de roulement représentant une couche de caoutchouc conçue pour entrer en contact avec le sol, et ladite base de bande de roulement représentant une couche de caoutchouc sous-jacente à ladite couche de chape de bande de roulement.

7. Bandage pneumatique selon au moins une des revendications précédentes, dans lequel ledit composant est un bourrage sur tringle de bandage pneumatique s'étendant vers l'extérieur en direction radiale à partir d'un talon de bande de roulement jusque dans le flanc du bandage pneumatique.
